Europäisches Patentamt

(19) European Patent Office

Office européen des brevets

(11) Numéro de publication: **0 180 489**
**B1**

(12) **FASCICULE DE BREVET EUROPÉEN**

(45) Date de publication du fascicule du brevet:
15.11.89

(51) Int. Cl.⁴: **G 11 B 15/61,** G 11 B 15/60

(21) Numéro de dépôt: **85401736.5**

(22) Date de dépôt: **06.09.85**

(54) Appareil pour l'enregistrement et la lecture d'information sur une bande magnétique.

(30) Priorité: **08.10.84 FR 8415407**

(43) Date de publication de la demande:
**07.05.86 Bulletin 86/19**

(45) Mention de la délivrance du brevet:
**15.11.89 Bulletin 89/46**

(84) Etats contractants désignés:
**DE FR GB IT**

(56) Documents cité:
**EP-A-0 115 275**
**EP-A-0 115 776**
**DE-A-1 537 240**
**FR-A-1 255 363**
**FR-A-2 373 853**
**US-A-3 512 694**
**US-A-3 691 315**
**US-A-3 697 676**
**US-A-3 943 566**
**US-A-4 035 842**
**US-A-4 167 023**

**IBM TECHNICAL DISCLOSURE BULLETIN, vol. 17,
no. 4, septembre 1974, page 1188, New York, US;
R.C. DURBECK et al.: "Tape control device"
IBM TECHNICAL DISCLOSURE BULLETIN, vol. 18,
no. 12, May 1976, pages 3931-3934, New York, US;
A.M. GUZMAN: "Distortion-free tape steering**

(73) Titulaire: **SCHLUMBERGER INDUSTRIES, 50,
avenue Jean Jaurès, F-92120 Montrouge (FR)**

(72) Inventeur: **Delacou, Jean-Michel, 175, rue Fillette
Nicolas Philibert, F-92500 - Rueil- Malmaison (FR)**

(74) Mandataire: **Wagret, Frédéric, Schlumberger
Industries CENTRE DE RECHERCHE / SMR B.P.
620- 05, F-92542 Montrouge Cédex (FR)**

(56) Documents cité: (suite)
**mechanism"**

## Description

La présente invention concerne un appareil pour l'enregistrement et la lecture d'informations sur une bande, par exemple magnétique.

Elle concerne plus particulièrement un appareil du type comprenant un tambour constitué d'un cylindre supérieur et d'un cylindre inférieur coaxiaux, fixes et entre lesquels est disposé un disque rotatif coaxial de même diamètre et sur le pourtour duquel est placée au moins une tête d'enregistrement et de lecture. Une bande magnétique est susceptible d'être déplacée (à une vitesse sensiblement inférieure à celle de la tête) sur le tambour et la surface annulaire du disque tournant, le long d'un trajet hélicoïdal dont la longueur (dans le sens longitudinal) et le pas (c'est-à-dire l'inclinaison par rapport à l'axe du tambour) sont données, grâce à des galets de vrillage disposés à proximité et respectivement en aval et en amount du tambour par rapport au sens d'avancement de la bande.

Il est connu depuis longtemps d'enregistrer et de lire des données sur une bande magnétique au moyen d'un appareil comportant une tête tournante.

On sait que les informations enregistrées à l'aide de tels appareils sont portées sur la bande selon des segments linéaires ou pistes, les unes longitudinales (réservées par exemple à l'enregistrement de signaux audibles et/ou de repères de synchronisation), les autres obliques par rapport à l'axe longitudinal de la bande et recevant les données ou informations enregistrées en vue d'un traitement ultérieur.

L'utilisation d'enregistreurs multipistes permet, de façon également connue, d'augmenter le débit d'informations enregistrées ou lues sur la bande, proportionnellement au nombre de pistes.

Néanmoins, des limitations apparaissent dans les débits d'informations susceptibles d'être atteints, notamment dues aux difficultés d'exploitation en temps réel des informations relues sur la bande.

Dans certaines applications par exemple, on enregistre en temps réel, à débit élevé, des informations numériques représentatives de paramètres physiques, issues d'une pluralité de capteurs. Ces informations sont destinées à être relues ultérieurement et exploitées en temps différé par un calculateur.

Si le débit des informations à la lecture ne peut être modifié par rapport au débit des informations à l'enregistrement, ce dernier ne peut alors dépasser la valeur maximale du débit acceptable par le calculateur procédant à l'exploitation des informations relues sur la bande, ce qui est gênant lorsque le nombre d'informations à enregistrer en temps réel par unité de temps est important.

Il se peut, dans d'autres cas, que le calculateur ait à travailler dans des conditions dans lesquelles son débit minimal acceptable est supérieur au débit d'informations admises à l'enregistrement.

Il est donc souhaitable de pouvoir faire varier, dans des proportions aussi grandes que possible, le rapport des débits des informations lues et enregistrées.

Or, deux paramètres doivent être conservés entre l'enregistrement et la lecture, à savoir d'une part la trajectoire de la tête par rapport à la bande, de manière à relire l'information exactement à l'emplacement où elle a été enregistrée, et d'autre part la vitesse relative de la tête et de la bande, qui ne peut être modifiée de plus de quelques centièmes en valeur relative, sans conduire à des distorsions du signal.

Cependant, comme la vitesse des têtes est très supérieure à la vitesse de la bande, cette dernière peut être modifiée, dans le but d'obtenir une variation du débit d'informations, sans que cela entraîne une variation inacceptable de la vitesse relative de la tête par rapport à la bande.

On connaît déjà des moyens permettant de relire, au moyen d'une tête tournante, des informations sur une bande magnétique dont la vitesse peut prendre deux valeurs distinctes. En particulier, de tels moyens sont prévus dans les magnétoscopes qui permettent une visualisation avec un arrêt sur image, et dans lesquels les têtes peuvent balayer soit les pistes successives de la bande magnétique en mouvement soit une même piste de la bande immobile.

Dans ces appareils connus, afin de compenser la variation de pente de la trajectoire des têtes par rapport à la bande, résultant du passage de la vitesse de la bande de sa valeur nominale à une valeur nulle ou inversement, la trajectoire des têtes est corrigée de manière que ces dernières continuent à suivre la ou les piste(s) correspondant aux informations enregistrées.

Néanmoins, dans ces appareils connus, la correction est de faible amplitude et peut être réalisée, comme le montre par exemple le brevet US-A-4 410 918, au moyen d'un bilame piézoélectrique qui contrôle à tout moment la position de chaque tête. Toutefois, une telle solution suppose le recours à des contacts glissants de mise en oeuvre délicate et de fiabilité moyenne, dont l'utilisation devient coûteuse et complexe dans le cas d'un grand nombre de têtes. Elle n'est en outre aisément applicable que lorsque la correction de trajectoire est de faible amplitude.

Par ailleurs, on connaît par le document EP-A-115 776 un dispositif destiné à maintenir une bande magnétique dans une position donnée par rapport à un tambour porteur de têtes tournantes, comprenant des galets amont et aval. Ce dispositif connu comprend aussi des éléments permettant de modifier le pas du trajet hélicoïdal de la bande, mais ces éléments ne sont pas constitués par des galets.

Dans ce contexte, la présente invention à pour but de proposer un dispositif permettant, de façon simple, de conserver constante la direction de la trajectoire de la tête par rapport à la bande, quelle que soit la vitesse donnée à celle-ci dans un large domaine de valeurs.

A cette fin, selon l'invention, l'appareil comprend des moyens pour modifier le pas du trajet hélicoïdal de la bande en fonction de la vitesse de celle-ci, de manière que la trajectoire de la tête par rapport à la bande ait une direction constante, indépendante de la vitesse de la bande. Il devient ainsi notamment possible, en dotant un enregistreur à têtes tournantes de moyens pour faire varier la vitesse de la bande de façon sensiblement proportionnelle à un débit d'informations souhaité, et de moyens pour ne mettre en service qu'un nombre de têtes proportionnel à ce débit souhaité, d'obtenir des débits d'informations très différents à l'enregistrement et à la lecture. Une telle application peut être illustrée par l'exemple d'un enregistreur pourvu de 32 têtes tournantes. Si l'enregistrement est effectué avec ces 32 têtes, avec une vitesse de têtes de 40 m/s et une vitesse de bande de 1 m/s, et si la relecture des informations enregistrées est réalisée avec une seule tête, avec une vitesse de tête de 40 m/s et une vitesse de bande de 3,125 cm/s, le rapport des débits mentionnés ci-dessus, égal au rapport des vitesses de bande, atteint la valeur 32.

Selon une forme de réalisation avantageuse, les moyens pour modifier le pas du trajet hélicoïdal comprennent au moins un galet mobile le long d'un trajet dit de débattement, et disposé en amont ou en aval du tambour par rapport au sens de déplacement de la bande.

Les moyens pour modifier le pas du trajet de bande hélicoïdal, comprennent par exemple deux galets mobiles respectivement disposés en amont et en aval du tambour et séparés par une différence de hauteur donnée, le pas du trajet hélicoïdal étant modifié par un déplacement, le long d'un trajet de débattement, de l'un au moins des galets mobiles opérant une variation de la longueur du brin de bande compris entre ces galets et passant sur le tambour, sans variation sensible de ladite différence de hauteur.

La précision ainsi obtenue sur la variation du pas du trajet hélicoïdal est bien plus élevée que si le galet se déplaçait verticalement; ceci est particulièrement avantageux, compte-tenu des faibles variations du pas du trajet hélicoïdal à réaliser, de l'ordre de 0°5, et de la largeur usuelle d'une piste, voisine de 40 microns.

De préférence, les deux galets mobiles se déplacent de manière que les projections de leurs trajectoires de débattement, dans le plan de rotation des têtes, soient symétriques par rapport au plan bissecteur de la projection, dans le plan de cette tête, de l'angle au centre du trajet hélicoïdal.

Ainsi, la position du point milieu, dans le sens longitudinal, de la fibre médiane ou neutre du trajet hélicoïdal n'est pas modifiée, au moins dans une direction transversale au plan bissecteur.

Afin d'obtenir un encombrement minimal, les deux galets mobiles se déplacent le long de leur trajet de débattement dans des plans respectifs symétriquement disposés de part et d'autre du plan de rotation des têtes, et parallèles à ce dernier, suivant les directions des projections, dans ces plans, des brins de bande tangents à la fois au tambour et à ces galets mobiles respectifs.

Cette double condition concernant le trajet de débattement de chaque galet mobile (symétrie par rapport au plan bissecteur et parallélisme au plan de rotation des têtes) permet de conserver ledit point milieu du trajet hélicoïdal invariant dans l'espace lors des débattements des galets mobiles, permettant ainsi la maise en place d'une tête de synchronisation en regard du bord de bande à l'aplomb dudit point milieu.

L'appareil de l'invention, défini par les caractéristiques exposées ci-dessus, est particulièrement adapté à un chargement rapide de la bande sur le tambour.

Selon l'art antérieur, le chargement de la bande est réalisé soit manuellement avec les risques de rupture de la bande qui en découlent, soit à l'aide d'organes complexes.

Ceci est d'autant plus gênant que les appareils du genre décrit ci-dessus sont dans la plupart des cas destinés, au moins lors de l'acquisition des données, à un usage "sur le terrain" dans des conditions d'environnement difficiles et sont appelés à être manipulés par des personnes ne possédant pas toujours le temps, ni les moyens nécessaires pour que l'opération de chargement s'effectue sans dommage pour la bande.

La présente invention remédie à cet état de fait et concerne un appareil susceptible de permettre un chargement aisé et rapide de la bande sur le tambour, du type comprenant au moins deux galets de vrillage disposés respectivement de part et d'autre du tambour et au-delà de chaque galet mobile par rapport au tambour.

Dans ce but, les galets mobiles destinés à faire varier le pas du trajet hélicoïdal jouent également le rôle de moyens de chargement, et sont, à cette fin, chacun monté mobile le long d'un trajet de chargement entre une position de repos située par rapport au tambour au-delà du brin de bande joignant les galets de vrillage de part et d'autre du tambour, et une position de travail moyenne située dans le plan contenant le trajet de débattement du galet mobile correspondant, les trajets de chargement des galets mobiles étant de direction générale inclinée et parcourus, de la position de repos vers la position de travail, suivant un sens respectivement montant pour un galet et descendant pour l'autre, et ces galets mobiles ayant des axes sensiblement perpendiculaires à leur trajet de chargement.

Ces caractéristiques permettent l'utilisation de cassettes de conception simple dans des conditions de fiabilité avantageuse et sans danger pour la bande, convenant parfaitement notamment aux conditions de travail rencontrées habituellement sur le terrain. En outre, le chargement est réalisé à l'aide d'un nombre de galets limité et sans risque de rupture de la bande.

Afin que le débattement des galets mobiles n'affecte pas le vrillage de la bande, les galets mobiles destinés au chargement et à la modification du pas d'une part, et les deux galets de vrillage immédiatement voisins de ces derniers d'autre part, sont de préférence des galets à axes flottants permettant, par la possibilité qu'ils ont de s'incliner, d'équilibrer les forces de tension de la bande qu'ils supportent. On sait en effet que les galets à axes flottants, connus en soi, peuvent osciller autour de tout axe perpendiculaire à leur axe longitudinal et passant par le milieu de ce dernier.

Selon une forme de réalisation de l'invention, la projection dans le plan de rotation de la tête de chacun des trajets de chargement des deux galets mobiles qui sont destinés à la modification du pas et au chargement, est sensiblement transversale au brin de bande libre qui, en position de repos des galets mobiles, joint les galets de vrillage disposés de part et d'autre du tambour.

L'appareil comporte par exemple deux ensembles de galets de vrillage disposés de chaque côté du tambour et au-delà du galet mobile correspondant par rapport à ce dernier, et comprenant chacun un premier galet relativement éloigné du tambour et d'axe fixe parallèle à celui du tambour et un second galet relativement proche du tambour et d'axe oscillant autour de son centre, la direction du brin de bande reliant les deux galets de vrillage dans son parcours de vrillage, pour chaque ensemble, étant au moins approximativement orthogonale au brin de bande tangent au tambour en position chargée de la bande.

Selon une variante plus complète, chaque ensemble de galets comprend en outre des troisième et quatrième galets de vrillage d'axes sensiblement parallèles à celui du galet mobile correspondant, disposés entre le second galet de vrillage et ce galet mobile, et définissant un parcours de vrillage secondaire par rapport au parcours de vrillage principal défini par les premier et second galets de vrillage, les parcours de vrillage respectivement principal et secondaire de chaque ensemble de vrillage étant orthogonaux au brin de bande tangent au tambour, et les fibres neutres des brins de bande reliant les troisième et quatrième galets de vrillage secondaire étant contenues dans le plan de rotation des têtes.

L'invention est applicable à un appareil dans lequel la bande magnétique est enroulée sur deux bobines de stockage non coplanaires, à chacune desquelles correspond un ensemble de vrillage, la fibre neutre du brin de bande reliant entre eux les deux galets de vrillage principal de chaque ensemble étant disposée dans le plan médian de la bobine de stockage correspondante, et la fibre neutre du brin de bande reliant entre eux les deux galets de vrillage secondaire de chaque ensemble de vrillage étant disposée dans le plan de rotation des têtes.

L'invention concerne également un ensemble pour l'enregistrement et la lecture d'informations stockées sur un support en forme de bande, par exemple magnétique, enroulée sur un jeu de bobines de stockage disposées dans un conteneur formant cassette associée à l'appareil selon l'invention décrite ci-dessus, ainsi qu'une cassette et une platine formant ledit ensemble.

D'autres particularités et avantages de l'invention ressortiront de la description qui suit, donnée à titre indicatif sans caractère limitatif, et se rapportant aux dessins annexés dans lesquels:

Les figures 1A et 1B constituent la figure 1 et montrent respectivement de dessus et en perspective un premier exemple de réalisation d'un appareil selon l'invention.

La figure 2 montre schématiquement le changement d'inclinaison du trajet de bande hélicoïdal portant contre le tambour.

Les figures 3A, 3B, 3C constituent la figure 3 et montrent, de dessus pour la première et en perspective pour les autres, un tambour, les galets de chargement, et les galets de vrillage d'un second exemple de réalisation d'un appareil pourvu de moyens de chargement selon l'invention.

La figure 4 est un diagramme dans un plan vertical des hauteurs de la fibre neutre de la bande en différents points de son parcours le long de l'appareil de la figure 3A.

La figure 5 est une vue de gauche schématique de l'appareil de la figure 3A.

La figure 6 est une vue de dessus schématique d'une variante de réalisation de l'appareil selon l'invention.

La figure 7 est un diagramme dans un plan vertical des hauteurs de la fibre neutre de la bande dans son trajet le long de l'appareil de la figure 6.

La figure 8 est une vue de côté en élévation d'un appareil correspondant au schéma de la figure 6.

La figure 9 montre de dessus une cassette contenant deux bobines coaxiales et chargées sur une platine.

La figure 10 est une vue de dessus de la cassette de la figure 9 seule.

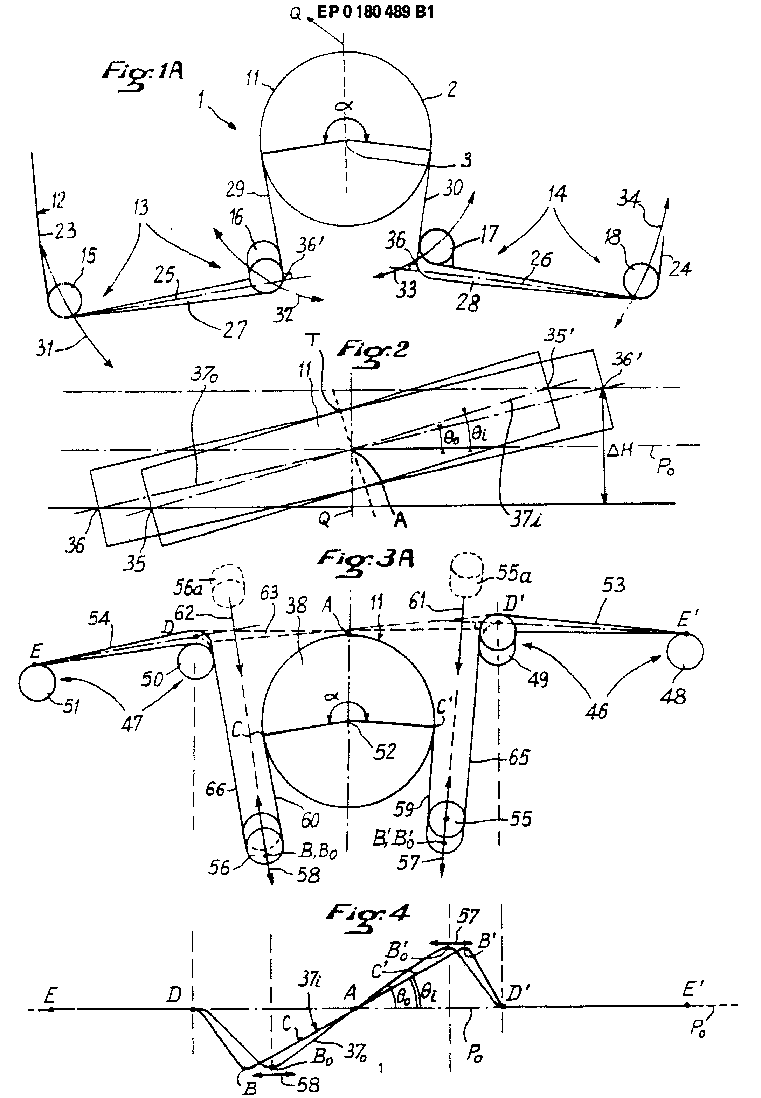

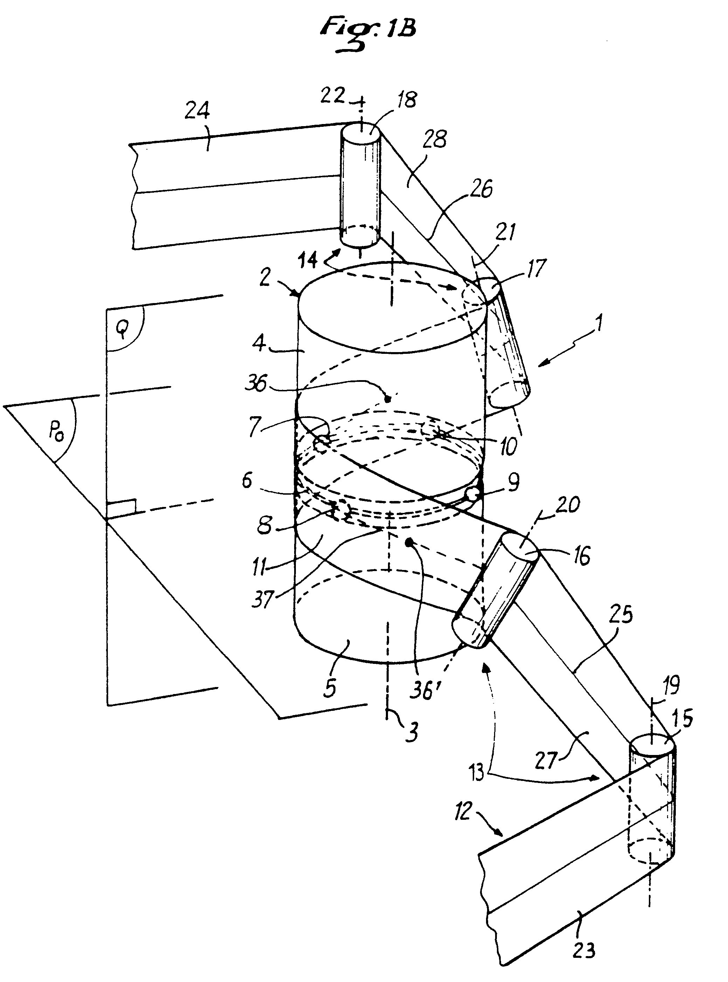

On a représenté schématiquement sur la figure 1, un premier exemple d'appareil selon l'invention.

L'appareil 1 comprend des moyens d'enregistrement et de lecture constitués d'un tambour cylindrique 2, d'axe 3 (vertical en l'occurence) et constitué, de manière connue, d'un cylindre supérieur 4 et d'un cylindre inférieur 5 coaxiaux fixes, entre lesquels est placé un disque rotatif 6 pourvu d'au moins une tête d'enregistrement et de lecture magnétique (désignée par la suite par le terme tête), connue en elle-même. De préférence, le disque comprend plusieurs têtes, soit par exemple quatre têtes 7 à 10 disposées à 90° l'une de l'autre, dans le plan Po du disque rotatif, orthogonal à l'axe 3 du tambour 2. Le plan Po correspond à la dénomination plan de rotation des têtes employée jusqu'ici. Dans le cas où l'on dispose plusieurs têtes décalées sur une même génératrice du disque rotatif, le plan Po est alors considéré comme le plan médian équidistants des têtes.

Cet exemple de disposition des têtes sur le disque rotatif 6 est tel que chaque tête est active sur un demi tour du disque.

L'appareil comprend des moyens (non représentés, mais connus en soi) pour faire varier la vitesse de défilement de la bande, et des moyens (également connus mais non représentés) pour mettre en service une ou plusieurs têtes.

Ces moyens sont actionnés de manière que le rapport du nombre de têtes en service à l'enregistrement des informations au nombre de tête en service à la lecture des informations soit égal au rapport de la vitesse de défilement de bande à l'enregistrement à la vitesse de défilement de bande à la lecture, c'est-à-dire encore égal au rapport du débit d'informations à l'enregistrement au débit d'informations à la lecture.

Le nombre de têtes en service (à l'enregistrement et à la lecture) étant un nombre entier, le rapport des vitesses de bande à l'enregistrement et à la relecture est exprimé par un nombre rationnel.

Contre la surface du tambour, et de façon à porter contre la surface annulaire du disque 6, est susceptible d'être déplacée, selon un trajet hélicoïdal 11, une bande magnétique 12 formant le support des informations destinées à être enregistrées et lues. La bande 12 est entraînée en défilement par des moyens connus en eux-mêmes, non représentés sur la figure 1 pour des raisons de clarté.

Des ensembles 13, 24 de vrillage permettent le cheminement de la bande 12, depuis une bobine de stockage amont vers une bobine de stockage aval (non représentées), ainsi que le positionnement relatif correct de la bande 12 et du tambour 2.

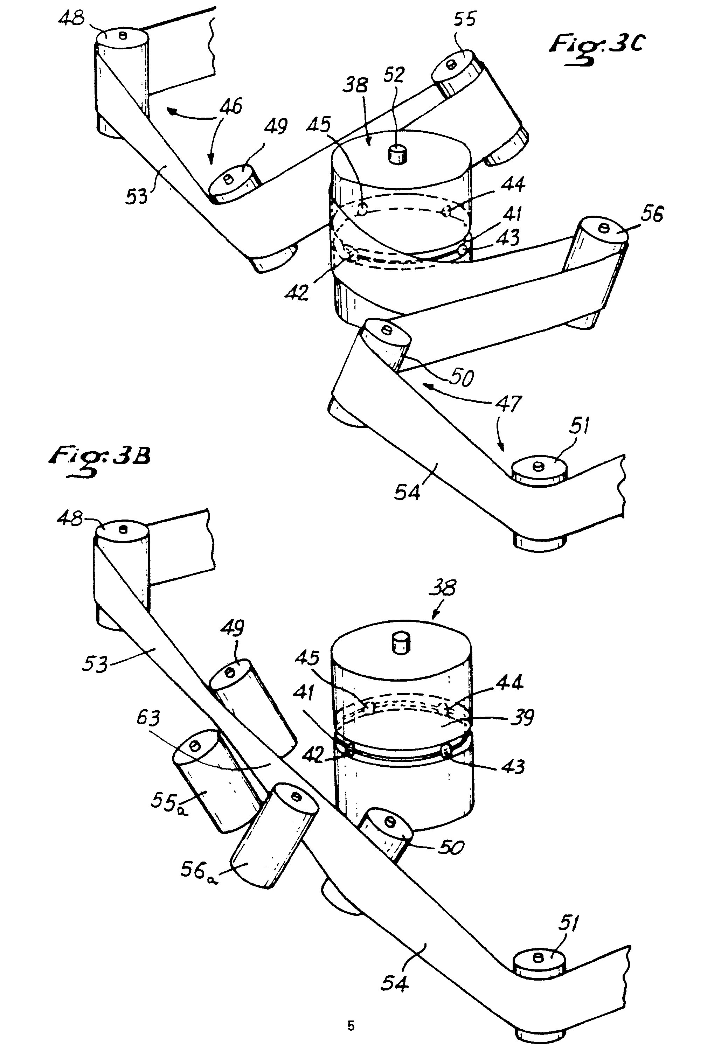

Ces ensembles de vrillage sont situés de part et d'autre du tambour 2, et sont composés chacun dans l'exemple de la figure 1, d'une paire de galets de vrillage respectivement 15, 16 et 17, 18. Chaque paire comprend un premier galet de vrillage 15, 18 d'axe 19, 22 parallèle à l'axe 3 du tambour 2, et un second galet de vrillage 16, 17 d'axe incliné 20, 21 et d'orientation variable, opérant un vrillage de la portion de bande qui les rejoint et permettant d'enrouler cette bande 12 autour du tambour 2, selon un trajet hélicoïdal 11 de pas donné, correspondant à un angle d'inclinaison θ (comme montré sur la figure 2 où la surface du tambour est développée à plat) et selon un angle d'enroulement α donné (figure 1A) projeté sur un plan parallèle au plan Po.

Les axes 20 et 21 des seconds galets de vrillage 16, 17 sont inclinés par rapport à l'axe 3 du tambour dans des directions respectivement perpendiculaires aux tangentes menées aux extrémités du trajet hélicoïdal 11 défini sur le tambour 2.

Les galets de vrillage 15, 16 respectivement 17, 18 sont disposés dans des plans horizontaux différents équidistants du plan horizontal Po du disque rotatif portant les têtes et parallèles à ce dernier.

Si l'on désigne par "plan bissecteur" le plan Q perpendiculaire au plan Po et passant par la bissectrice de l'angle au centre α du trajet hélicoïdal, le trajet de bande de part et d'autre du tambour présente (en projection sur le plan Po) une symétrie par rapport au plan bissecteur Q et le point A, milieu dans le sens longitudinal de la fibre neutre 37 du trajet hélicoïdal 11, est à la fois dans le plan Po et dans ledit plan Q bissecteur (figure 2).

Les exemples de réalisation décrits ci-après et représentés sur l'ensemble des figures seront considérés comme remplissant cette condition.

Ainsi, les axes 20, 21 des seconds galets 16, 17 de chaque ensemble de vrillage sont inclinés par rapport à l'axe 3 du tambour 2 selon des angles de même valeur, égale à l'angle d'inclinaison θ du trajet hélicoïdal.

Afin que les tronçons de bande 23, 24 reliant chaque bobine de stockage à l'ensemble de vrillage 13, 14 correspondant, soient dans le plan de la bobine correspondante, tout en assurant entre les deux galets de vrillage de chaque ensemble un vrillage correct, les fibres médianes ou neutres 25, 26 des brins de bande 27, 28 reliant les deux galets 15, 16 et 17, 18 de chaque paire de vrillage, sont orthogonales, respectivement à chaque fibre neutre 36', 36 du brin de bande 29, 30 tangent à la fois au tambour 2 et au second galet de vrillage 16, 17 correspondant.

Les moyens généraux permettant de modifier le pas du trajet hélicoïdal 11, ont été mentionnés précédemment.

Les figures 1 à 8 et la description s'y rapportant concernent des exemples de réalisation de l'appareil selon l'invention dans lesquels la modification du pas du trajet hélicoïdal 11 est réalisé par le déplacement, le long de trajets de débattement, d'au moins deux galets mobiles disposés respectivement en amont et en aval du tambour et séparés par une différence de hauteur donnée, opérant une variation de la longueur du brin de bande compris entre ces deux galets mobiles et passant sur le tambour, sans faire varier (de manière sensible) ladite différence de hauteur.

Il est bien entendu que l'invention n'est nullement limitée à ce type d'appareil et embrasse au contraire toute variante concernant notamment le nombre des galets mobiles et leur trajet de débattement.

Deux exemples de l'appareil appartenant au type mentionné ci-dessus et permettant de modifier le pas du trajet hélicoïdal 11, c'est-à-dire l'angle θ, seront décrits ci-après, l'un en se référant à la figure 1, et l'autre aux figures 3 à 10.

Selon le premier exemple décrit ci-après, se rapportant à la figure 1, l'appareil assure la modification du pas, c'est-à-dire de l'angle θ, en faisant varier l'enroulement du trajet hélicoïdal 11, sans toutefois modifier la hauteur "utile" ΔH du tambour définie précédemment (figure 2).

A cette fin, l'appareil comprend deux paires de galets mobiles (confondus avec les galets de vrillage 15 à 18 dans l'exemple de la figure 1) le long de trajets de débattement en arcs de cercle respectivement 31, 32, 33, 34 (figure 1A).

Afin de permettre le mouvement des galets mobiles, l'embase de l'axe de chacun de ces derniers est, par exemple, montée sur un coulisseau susceptible d'être entraîné en translation (par câble, vis sans fin ou analogue, relié à un moteur), le long d'un rail en arc de cercle centré sur l'axe du tambour.

Ce faisant, l'enroulement α du trajet hélicoïdal 11 est modifié, donc la longueur de ce dernier (figure 2).

Dans la mesure où les trajets de débattement en arc de cercle 31 à 34 de chacun des quatre galets mobiles sont respectivement disposés dans un plan parallèle au plan Po, c'est-à-dire un plan horizontal, il est nécessaire de prévoir le changement d'inclinaison de l'axe 20, 21 des seconds galets mobiles 16, 17. Ainsi, on conserve une hauteur ΔH constante (figure 2) entre les points 35 et 35', 36 et 36' de la fibre neutre 37i, 37o de l'ensemble du trajet hélicoïdal situé entre les galets 16 et 17, tout en modifiant le pas, c'est-à-dire l'angle θ que fait la fibre neutre 37 du trajet hélicoïdal 11 avec l'horizontale, qui passe ainsi de θ (position moyenne 37o) à θi (position modifiée 37i).

La modification de l'inclinaison de l'axe 20, 21 des seconds galets 16, 17, (les plus proches du tambour) est susceptible d'être réalisée sans réglage ou intervention supplémentaire, grâce au montage dit "flottant" de ces galets. Ce montage connu consiste à permettre au galet de pivoter autour de son centre: la position d'équilibre de l'axe, lors du défilement de la bande, est alors déterminée par la valeur et la direction des forces de tension de la bande.

Ainsi, lorsque la bande change d'inclinaison sur le tambour tout en défilant, l'axe des galets mobiles 16, 17 s'incline de manière à ce qu'il soit toujours orthogonal à la fibre neutre du brin de bande tangent audit galet. On évite ainsi l'apparition d'une composante tangentielle verticale de la force de tension interne à la bande, tendant à faire glisser celle-ci par rapport au galet.

Il est à noter que dans l'exemple particulier de la figure 1 qui vient d'être décrit, les galets mobiles permettant, par leur débattement, la modification du pas du trajet hélicoïdal, sont confondus avec les galets de vrillage, et qu'en outre cette modification du pas entraîne la variation de l'enroulement α du trajet hélicoïdal 11.

Le second exemple proposé selon l'invention pour la modification du pas du trajet hélicoïdal, est décrit en se référant aux figures 3 à 10, et tout d'abord aux figures 3A à 3C montrant une forme de réalisation simplifiée de l'appareil selon l'invention.

Cet appareil comprend un tambour 38 cylindrique comportant un cylindre supérieur 39 et un cylindre inférieur 40, coaxiaux et entre lesquels est placé un disque rotatif central 41 pourvu sur son pourtour de plusieurs têtes 42 à 45 disposées à 90° l'une de l'autre (figures 3B et 3C).

L'appareil comporte en outre deux ensembles de vrillage 46, 47 situés de part et d'autre du tambour 38 et constitués chacun d'une paire de galets respectivement 48, 49 et 50, 51, à savoir un premier galet 48, 51 d'axe parallèle à l'axe 52 du tambour 38 et un second galet 49, 50 d'axe incliné afin de vriller le tronçon 53, 54 de bande reliant entre eux les deux galets de vrillage d'une même paire. Les inclinaisons des axes des galets de vrillage 49, 50 sont, comme celles des galets de vrillage du premier exemple décrit ci-dessus et se rapportant aux figures 1A et 1B, égales à l'angle d'inclinaison θ du trajet hélicoïdal 11.

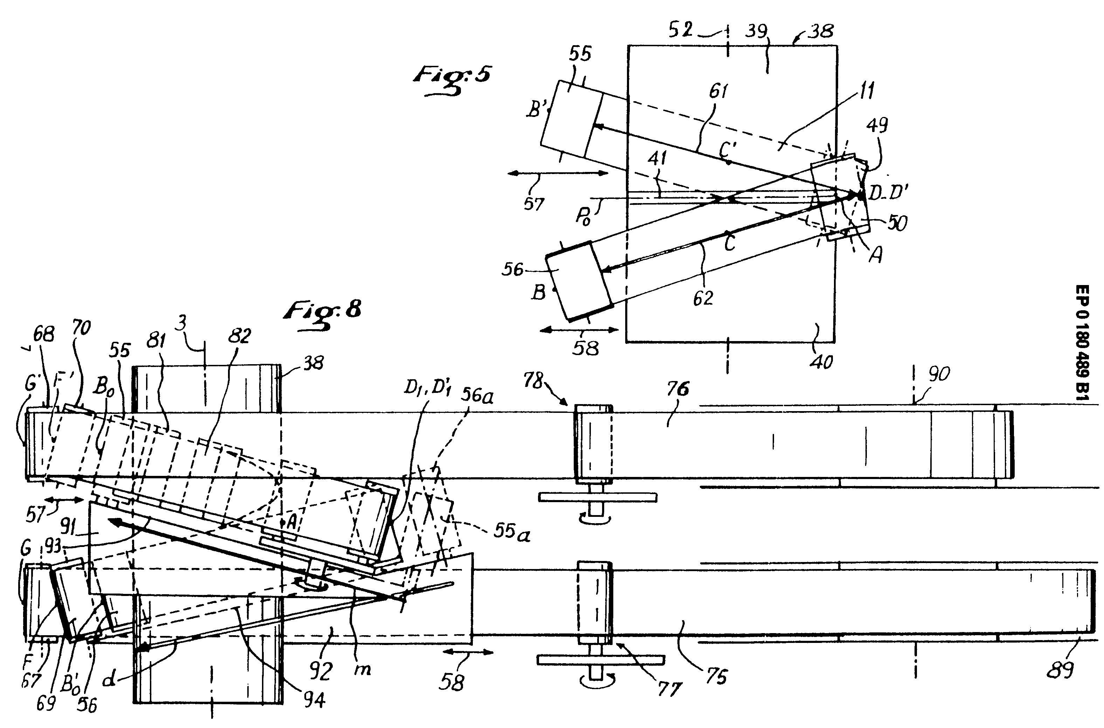

La fibre neutre de chacun desdits tronçons vrillés 53, 54 est située dans le plan Po, qui, selon l'hypothèse mentionnée précédemment, passe par A, point milieu de la fibre neutre 37 du trajet hélicoïdal 11 enroulé sur le tambour, ainsi que l'on peut le voir sur le diagramme de la figure 4.

Selon ce second exemple de réalisation, l'appareil comporte deux galets mobiles 55, 56 (distincts des galets de vrillage, contrairement au premier exemple de la figure 1) disposés respectivement en amont et en aval du tambour 38 et immédiatement à proximité de ce dernier, précisément entre le tambour et chaque ensemble de vrillage 46, 47. Les galets mobiles 55, 56 sont disposés de part et d'autre du plan Po, en une position de travail moyenne pour chacune desquelles on obtient les conditions d'enroulement (angle d'enroulement α et angle d'inclinaison θo moyen) désirées et mentionnées précédemment.

Egalement, selon ce second exemple de réalisation, les galets 55, 56 sont mobiles autour de leur position de travail moyenne (symbolisées par les points Bo et B'o dont la signification exacte sera donnée ultérieurement), le long de trajet de débattement, représentés sur les figures 3A et 4 par les flèches doubles 57, 58 pour permettre la modification du pas θ du trajet hélicoïdal 11.

Ces débattements sont situés dans des plans parallèles à Po et équidistants de ce dernier et sont parallèles aux projections respectives, sur le plan Po, des brins de bande 59, 60 tangents à la fois au tambour 38 et au galet mobile 55, 56 correspondant. Ces débattements sont symétriques par rapport au plan bissecteur Q.

Le point milieu A reste ainsi fixe dans l'espace lors des débattements, du fait que ces derniers sont symétriques et contenus dans des plans parallèles au plan Po.

Le point A constitue donc le point fixe dans l'espace autour duquel le trajet de bande hélicoïdal 11, portant contre le tambour, pivote lors de la modification du pas dudit trajet par rapport au tambour.

Cette disposition permet de placer (voir la figure 2) sur le tambour, sur le cylindre supérieur par exemple, une tête fixe de synchronisation T associée à une piste longitudinale placée en position supérieure sur la bande et destinée à synchroniser la vitesse des têtes avec la position des pistes inclinées successives porteuses des informations. Cette tête de synchronisation fixe T est placée sur le tambour, d'une part en regard de la piste longitudinale correspondante et d'autre part, sur la perpendiculaire à la fibre neutre 37 de la bande passant par A. Ainsi, les variations d'inclinaison de la bande sur le tambour, c'est-à-dire les variations du pas du trajet hélicoïdal, n'affectent que de façon négligeable le positionnement relatif de la tête fixe de synchronisation et de la piste longitudinale associée, puisque le point de la bande correspondant à la tête est placé sur la perpendiculaire au centre de rotation de la bande.

Selon une variante du second exemple de réalisation représenté sur la figure 3, un seul des galets 55 ou 56 pourrait être mobile le long d'un trajet de débattement, l'autre galet restant fixe en sa position de travail moyenne.

Cependant, par la suite, les deux galets mobiles 55, 56 seront considérés comme susceptibles de subir des débattements symétriques par rapport au plan bissecteur Q.

Ainsi, lors de ces débattements autour de la position moyenne de travail de chacun des galets mobiles 55, 56, l'inclinaison du trajet hélicoïdal 11 est modifiée, et ce, en maintenant constant l'enroulement α dudit trajet, égal à 188° dans l'exemple décrit.

Cette variation de l'angle d'inclinaison θ de la bande sur le tambour provoque un vrillage secondaire de la bande, qui s'ajoute au vrillage principal introduit par les galets de vrillage fixes 48 à 51.

Il est donc nécessaire de dévriller la bande et en outre de maintenir l'orthogonalité entre l'axe des galets fixes de vrillage et la fibre neutre du tronçon de bande aboutissant audit galet (afin d'éviter l'apparition d'une force verticale sur la bande tendant à faire glisser celle-ci sur le galet vers le haut ou vers le bas).

A cette fin, les galets mobiles 55, 56 d'une part, et les seconds galets fixes de vrillage 49, 50 d'autre part, sont montés sur des axes flottants, oscillant autour du centre du galet.

Selon l'exemple particulier de la figure 3, les ensembles de vrillage constitués des paires de galets 48, 49 et 50, 51 sont destinés à la fois au vrillage principal (permettant l'enroulement hélicoïdal autour du tambour) et au vrillage secondaire (suite aux débattements des galets mobiles 55, 56 autour de leur position de travail respective).

On définit sur les figures 3 à 5 les points B et B' comme étant les points d'intersection, d'une part de la fibre neutre du brin de bande portant contre le galet mobile 55, 56, et d'autre part de la direction du trajet de débattement 57, 58 correspondante autour de la position de travail moyenne, passant par le centre du galet mobile.

On définit en outre par Bo et B'o les points de l'espace, donc indépendants de la position de la bande, correspondant aux points B et B' pour la position de travail moyenne de chacun des galets mobiles 55, 56.

Ainsi, pour cette position de travail moyenne des galets mobiles 55, 56, les points B et Bo, et B' et B'o sont respectivement confondus.

Sur les figures 3A et 4, les points C et C', D et D' et E et E' sont définis comme étant les points de la fibre neutre de la bande tangente au tambour ou au galet correspondant.

Plus précisément, les points C et C' sont les points de tangence sur la bande à l'endroit où la bande s'écarte du tambour. Les points D et D' correspondent aux points de la fibre neutre du tronçon vrillé 53, 54 où celui-ci est tangent au galet de vrillage correspondant 50, 49 d'axe incliné et vient en contact avec ce galet.

De même, les points E et E' sont les points de la fibre neutre du brin de bande vrillé 53, 54 où celui-ci vient en contact avec le premier galet 51, 48 de vrillage correspondant.

Selon l'exemple particulier de la figure 3A, les tronçons 53, 54 vrillés DE et D'E', reliant les galets fixes de vrillage 48, 49 et 50, 51 de chaque paire entre eux, ont leur fibre neutre orthogonale aux brins de bande respectifs 59, 60 tangents en C' et C au tambour et aboutissant au galet mobile correspondant 55, 56.

Il est à noter que cette disposition n'est pas obligatoires et ne limite en rien l'invention. L'orthogonalité respective entre les tronçons vrillés D'E' et DE d'une part, et les tronçons 59, 60 d'autre part, présente simplement l'avantage de disposer la fibre neutre de chaque tronçon de bande vrillé 53, 54 dans un plan horizontal (parallèle au plan Po) donné, et correspondant au plan de la bobine de stockage.

Les inclinaisons par rapport à l'horizontale des brins de bande DB et BC d'une part, et D'B' et B'C' d'autre part, sont identiques et égales toutes deux à l'angle d'inclinaison θ du trajet hélicoïdal 11 sur le tambour, et les points Bo et B'o, correspondant à la position de travail moyenne de chacun des galets mobiles, sont équidistants de Po.

Puisque les projections sur le plan Q des longueurs des brins DB et D'B', sont égales à celles de AB et AB', les points D et D' peuvent donc être considérés comme fixes dans l'espace. Les galets fixe de vrillage 50, 49 oscillent autour de leurs centres de manière à rattraper le vrillage secondaire de la bande, dû aux débattements des galets mobiles 55, 56 autour de leur position de travail moyenne.

Les points C et C', lors des débattements des galets mobiles 55, 56, restent sur une même droite parallèle à l'axe 3 du tambour 38, puisque l'enroulement α du trajet 11 hélicoïdal portant sur le tambour n'est pas modifié.

Lors des débattements des galets mobiles, autour de leur position de travail moyenne, les points B et B' doivent rester sur des plans parallèles au plan Po pour conserver fixe dans l'espace le point A.

Or, l'inclinaison des axes des galets mobiles 55, 56 varie comme mentionné précédemment pour rattraper le vrillage secondaire dû aux débattements desdits galets.

Le trajet de l'embase de chaque galet mobile doit donc théoriquement être différent du trajet horizontale rectiligne recherché des points B et B'.

On peut montrer que l'embase de l'axe de chaque galet mobile 55, 56 doit se déplacer (si l'on veut maintenir B et B' dans des plans horizontaux), non pas suivant une droite contenue dans un plan parallèle au plan Po, mais suivant une courbe contenue dans un plan parallèle à l'axe du tambour et représentée par une fonction relativement complexe de fonctions trigonométriques et dans laquelle interviennent:

le rayon du galet mobile,
la demi-largeur de la bande,
l'angle d'inclinaison moyen et
l'angle d'inclinaison modifié.

Cependant, compte-tenu des valeurs des paramètres rencontrées en pratique, (la variation de $\theta$ est de l'ordre de 0,5°), la valeur de y ne varie au maximum que de 0,2 microns, par rapport au plan horizontal correspondant, parallèle au plan Po.

On peut donc considérer avec une très bonne approximation, que l'embase de l'axe de chacun des galets mobiles 55, 56 se déplace dans un plan parallèle au plan Po lors des débattements 57, 58 autour de la position de travail, les plans respectifs contenant les galets 55 et 56 étant équidistants du plan Po.

On constate que l'appareil selon l'invention permet de modifier le pas de trajet hélicoïdal 11 de manière aisée, ne mettant en jeu qu'un nombre restreint de galets mobiles et le long de trajets de débattements simples.

Egalement, selon l'invention, l'appareil comporte des moyens de chargement de la bande permettant la mise en place de celle-ci sur le tambour selon un trajet hélicoïdal.

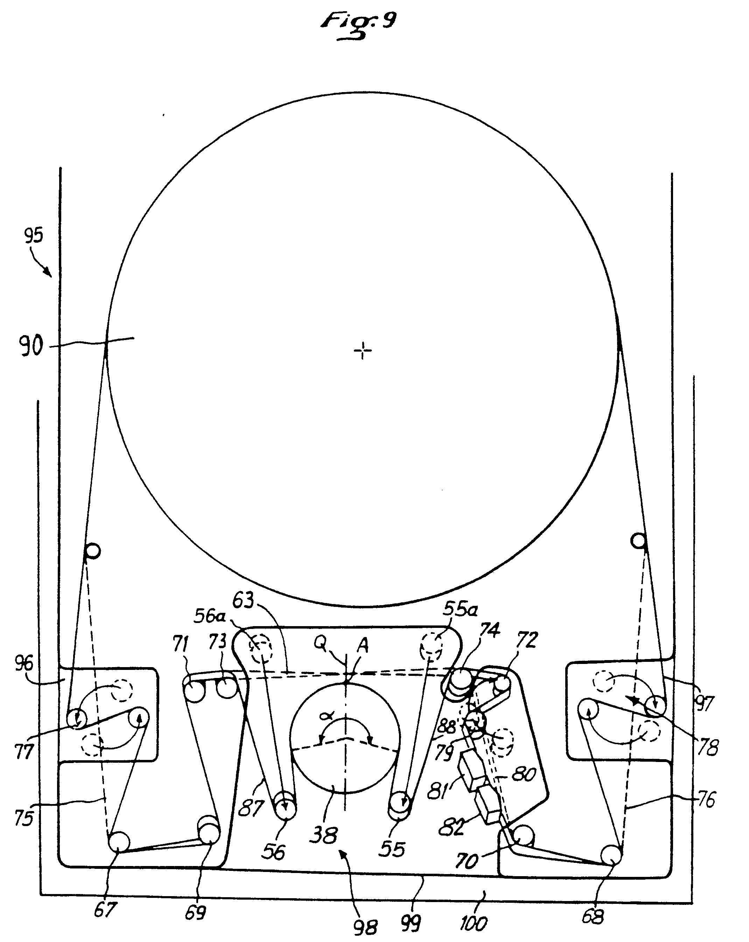

A cette fin, les galets mobiles 55, 56 constituent également des galets de chargement et sont dans ce but montés mobiles en translation et déplacables sous l'action des moyens de déplacement (non représentés, et explicités ci-après dans la description se rapportant à la figure 8), entre une position de repos 55a et 56a (représentée en pointillés sur la figure 3A) pour laquelle la bande est effacée par rapport auxdits galets mobiles et au tambour 38 et relie directement entre eux les seconds galets fixes 49 et 50 de vrillage selon le trajet vrillé 63 (correspondant à la figure 38), et une position de travail moyenne (en traits pleins sur la figure 3A) pour laquelle la bande porte contre le tambour selon le trajet hélicoïdal 11 (correspondant à la figure 3C).

Les galets mobiles 55, 56 de chargement (et de modification du pas) sont mobiles le long d'un trajet de chargement respectivement 61, 62, situés de part et d'autre du tambour 38, suivant une direction inclinée, l'une descendante (galet 56), et l'autre montante (galet 55), jusqu'à la position moyenne de travail correspondant à l'inclinaison moyenne $\theta_0$ de la bande sur le tambour (figure 5).

Les termes descendant et montant sont définis comme suit. On choisit un sens donné sur l'axe vertical 52 du tambour 38, dit montant en allant vers le haut et descendant en allant vers le bas. Le trajet de chargement des galets mobiles est dit descendant (ou montant) selon le sens du parcours de sa projection sur l'axe vertical 52 du tambour 38.

Les trajets de chargement 61, 62 sont, plus précisément, constitués chacun d'un segment de droite passant par Bo (respectivement B'o), contenu dans le plan incliné défini par les points D, Bo, C, (respectivement D', B'o, C') et parallèle, dans le cas de la figure 3, au brin de bande 60 (respectivement 59) tangent au tambour et au galet mobile correspondant.

Ainsi, deux seuls galets sont nécessaires au chargement de la bande sur le tambour, qui s'effectue de manière rapide et sûre sans danger pour la bande, tout en assurant un positionnement adéquat de celle-ci sur le tambour.

L'exemple de la figure 3 est particulier en ce sens que, d'une part chaque trajet de chargement 62, 61 est disposé dans un même plan vertical que la direction des débattements 57, 58 des galets mobiles (donc parallèle au brin de bande 59, 60 tangent au tambour) et que d'autre part chaque brin de bande incliné, respectivement 65 et 66, joignant le galet fixe incliné de vrillage 49, 50 et le galet mobile 55, 56 est parallèle à chacun des tronçons de bande libre 59, 60 tangent au tambour en C' et C. Chaque trajet de chargement 61, 62 (par hypothèse parallèle aux tronçons 59, 60) est alors également parallèle aux tronçons de bande inclinés 65, 66.

La forme de réalisation décrite ci-dessus et se rapportant aux figures 3 à 5, convient à un appareil associé à une cassette contenant des bobines de stockage coplanaires.

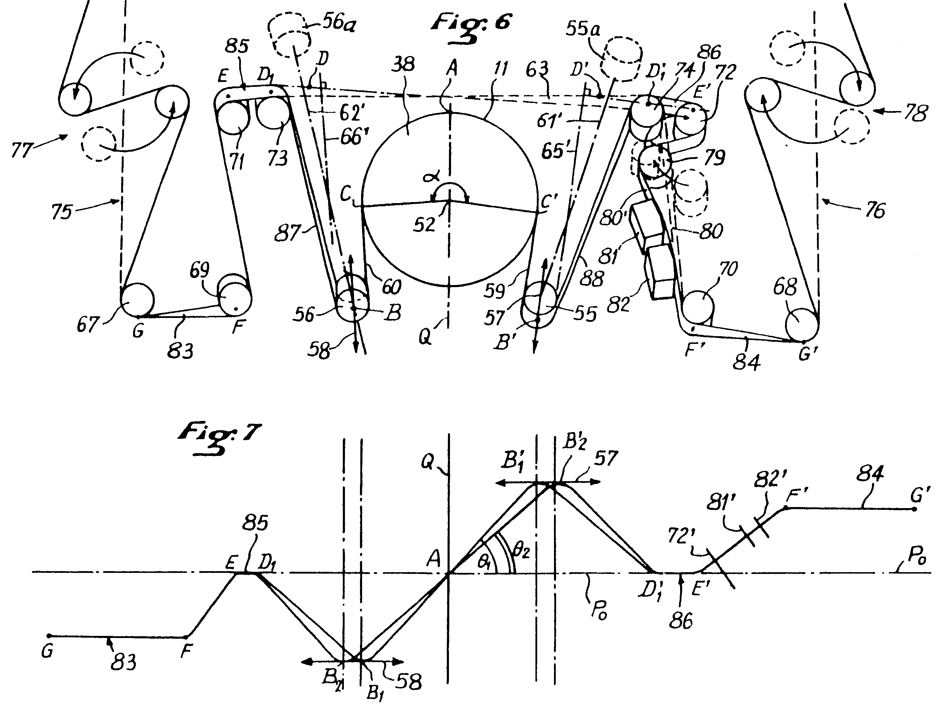

Une autre forme de réalisation de l'appareil selon l'invention est représentée sur les figures 6 et 8, appliquée plus particulièrement, quoique non obligatoirement, au cas où la cassette possède des bobines de stockage non coplanaires, par exemple, coaxiales.

Les éléments des figures 6 et 8 similaires à ceux des figures 3 et 5 portent des références identiques.

L'appareil comprend deux ensembles de vrillage disposés de chaque côté du tambour et comprenant chacun une première paire destinée au vrillage principal, à savoir un premier galet 67, respectivement 68, d'axe parallèle à l'axe 52 du tambour 38, et un second galet 69, respectivement 70, d'axe incliné pour permettre le vrillage principal de la bande, et en une seconde paire destinée au vrillage secondaire, à savoir un troisième galet 71, respectivement 72, d'axe incliné fixe et un quatrième galet 73, respectivement 74, d'axe incliné oscillant monté flottant.

La forme de réalisation représentée sur la figure 6 comprend les organes additionnels suivants.

Sur le trajet des brins de bande 75, 76 aboutissant aux bobines de stockage coaxiales (non représentées), sont prévus des détecteurs de tension respectivement 77, 78, montés chacun sur un plateau rotatif, et comportant deux galets entre lesquels passe la bande.

De même, l'un des ensembles de vrillage (celui de droite sur l'exemple de la figure 6) comprend une platine tournante sur laquelle sont fixés le premier galet 72 de vrillage secondaire et un galet de dérivation 79. A proximité du brin de bande 80 reliant les galets 72, 74 de vrillage secondaire et le galet 70 de vrillage principal, sont disposés des organes auxiliaires de lecture 81, 82, connus en eux-mêmes, susceptibles d'être associés aux pistes longitudinales disposées sur la bande, et sur lesquels cette bande peut être appliquée par le galet mobile 79 déplacé de sa position de repos vers une position de travail par rotation de la platine qui le supporte.

Les points A, B, B', C et C' sont les homologues de ceux de la figure 3.

Les points F, G et F', G' correspondent aux points de la tangence de la fibre neutre du brin de bande 83, 84 reliant les galets fixes de vrillage principal correspondants 67, 69 et 68, 70, tandis que les points D1, E et D1', E' correspondent aux points de tangence de la fibre neutre du brin de bande 85, 86 reliant les galets de vrillage secondaire correspondants 71, 73 et 72, 74 entre eux deux deux.

Les points D et D' de l'espace, correspondent chacun au point de la fibre neutre du brin de bande 85, 86, tangent à un galet fictif homologue respectivement des galets 50, 49 de la figure 3A, c'est-à-dire positionnés de façon que la fibre neutre du brin de bande imaginaire 66', 65', reliant ledit galet fictif au galet mobile correspondant, soit orthogonal à DE, respectivement D'E'.

Par rapport à la réalisation de la figure 3, les seconds galets 73, 74 de chacune des paires de vrillage secondaire sont décalés angulairement en s'éloignant du tambour, autrement dit, les points D et D' ont été déplacés en D1 et D'1.

En outre, le tronçon de bande 87, 88 reliant le galet de vrillage secondaire 73 (respectivement 74) et le galet mobile 56 (respectivement 55) n'est pas parallèle aux tronçons respectifs 60, 59.

Cette disposition permet de faciliter le chargement de la bande sur le tambour 38 lors du mouvement des galets mobiles 55, 56 le long de leur trajet de chargement 61', 62'.

Afin que le changement de position, par rapport à la réalisation de la figure 3, des points D et D' en D1 et D'1 n'affecte pas la géométrie fondamentale de l'appareil, il est nécessaire que D1 (D'1) soit situé dans le plan Po.

Selon une variante de l'exemple se rapportant à la figure 6, les galets de vrillage secondaire 73 et 74, pourraient être montés mobiles le long de la droite DE, respectivement DE', de manière que les points D1 et D'1 soient déplaçables. Cependant, dans la suite de la description, les galets 73 et 74 seront considérés fixes.

La disposition des galets fixes de vrillage et des galets mobiles dans un plan vertical est illustrée sur la figure 7, où le trajet de bande il hélicoïdal présente deux inclinaisons $\theta 1$, $\theta 2$ différentes pour deux positions différents $B'_1$, $B_1$

et $B'_2$, $B_2$ de chacun des galets mobiles 55, 56 le long de leur direction de débattement 57, 58 respective.

Les segments FG et F'G' sont parallèles aux segments D1E respectivement D'1 E', et le segment incliné EF (E'F') est de longueur telle que FG (et F'G') soit contenu dans le plan médian de la bobine correspondante. La longueur EF (et E'F') peut être variable pour s'adapter aux variations de hauteur de bobines, indépendamment de la hauteur de bande "utile" $\Delta$ H sur le tambour définie précédemment (figure 2).

Les points E, D1, F, G sont dans le plan incliné DBoC, dans l'exemple des figures 6 et 8, Bo correspondant à la position moyenne de travail du galet mobile 56.

L'échelle des longueurs et des angles est approximative sur la représentation schématique de la figure 6. Ainsi, par exemple, les longueurs FG et F'G' sont en réalité plus longues: de même, l'inclinaison $\beta$ de FG et D1E, par rapport à une horizontale tangente au tambour en A, à été exagérée sur la figure 6, alors qu'elle n'a en réalité pour valeur que $\beta = \alpha - 180°$, soit pour $\alpha = 188°$, $\beta = 4°$.

Sur la figure 7, les références 81' et 82' indiquent la position des zônes de travail des têtes de lecture auxiliaires 81, 82. L'axe 72' représente l'axe du galet 72 de vrillage secondaire monté sur une platine rotative, et qui peut être constitué d'un cabestan associé à un moteur, pour l'entraînement de la bande.

La figure 8 représente une vue de côté de l'appareil de la figure 6, où les brins de bande 75 et 76 parallèles viennent de bobines de stockage coaxiales 89, 90.

L'appareil comprend deux rampes inclinées 91, 92, dont la face inclinée 93, 94 matérialise le trajet de chargement de chacun des galets mobiles 55, 56, suivant le sens de chargement indiqué par les flèches $\underline{m}$ et $\underline{d}$, soit montant pour le galet 55 et descendant pour le galet 56.

Les trajets de chargement, c'est-à-dire les faces inclinées 93, 94 des rampes, sont parallèles aux plans DABo et D'AB'o.

Le fonctionnement de l'appareil est le suivant en se référant aux figures 6, 7 et 8.

En position de départ, la bande suit le parcours en pointillé sur la figure 6 (tronçons de bande 75, 63, 80 et 76).

Puis, les platines des détecteurs de tension 77 et 78 pivotent, les brins de bande 75, 76 suivant alors les tracés en traits pleins (figure 6).

Ensuite, la platine du galet-cabestan 72 et du galet de dérivation 79 pivote à son tour, plaquant ainsi le brin de bande 80' contre les têtes auxiliaires 81, 82, qui suit alors le tracé en trait plein 80' (figure 6).

Pendant ce temps les galets mobiles 55 et 56 sont toujours en position 55a, 56a de repos.

Cette position, pour laquelle la bande est effacée par rapport au tambour (la bande n'étant pas "chargée"), permet d'effectuer des déroulements rapides de la bande, en vue par exemple de rechercher une séquence donnée d'informations sur la bande à l'aide des têtes auxiliaires 81 et 82, tel que des informations portées sur une piste longitudinale phonique ou une piste longitudinale porteuse d'informations temporelles ou de synchronisation.

Le chargement de la bande sur le tambour s'effectue par le déplacement des galets mobiles 55, 56 le long des faces inclinées 93, 94 des rampes 91, 92 dans le sens des flèches m, d de la figure 8 jusqu'à la position de travail moyenne correspondant à chaque point Bo, B'o, sous l'action de moyens de déplacement tel qu'un câble par exemple fixé à l'embase du galet mobile correspondant. Une fois le galet mobile en position de travail, celui-ci est bloqué en cette position sur la rampe grâce à un organe de blocage amovible, solidaire de la rampe.

Le défilement de la bande peut alors démarrer, ainsi que l'enregistrement ou la lecture des informations portées sur la bande grâce aux têtes tournantes 42 à 45.

En fonction du débit d'informations souhaité, une inclinaison est choisie pour le trajet hélicoïdal 11 de la bande autour du tambour.

L'éventuel changement d'inclinaison de ce trajet est réalisé par le mouvement de débattement des rampes inclinées, sur lesquelles sont positionnés les galets mobiles 55, 56, suivant des directons de débattement 57, 58 parallèles au plan Po et à la projection; sur ce plan des brins de bande 59, 60 tangents au tambour et aux galets mobiles 55, 56.

Les rampes inclinées sont déplacées par l'intermédiaire de coulisseaux fixés sur chacune de celles-ci et rendus mobiles le long de rails (de direction adéquate décrite ci-dessus) par l'intermédiaire d'un moteur pas à pas ou d'une transmission à vis et billes reliée à un moteur.

Ce faisant, l'inclinaison des axes des galets mobiles 55, 56 et des galets 73, 74 de chaque paire de vrillage secondaire est modifiée pour conserver l'orthogonalité entre les axes des galets et la fibre neutre de la bande, et pour corriger le vrillage secondaire introduit par ce changement d'inclinaison de la bande sur le tambour. La modification de l'inclinaison des axes des galets mobiles est réalisée grâce au montage dit flottant de ces galets, ainsi que mentionné précédemment.

On note que les paires de galets 71, 73 et 72, 74 de chaque ensemble de vrillage sont destinées au vrillage secondaire consécutif au changement d'inclinaison du trajet hélicoïdal de la bande sur le tambour, alors que les paires de galets 67, 69 et 68, 70 sont réservés au vrillage principal de la bande, indépendant du chargement et de la variation d'inclinaison du trajet hélicoïdal, donc indépendant du mouvement de galets mobiles 55, 56.

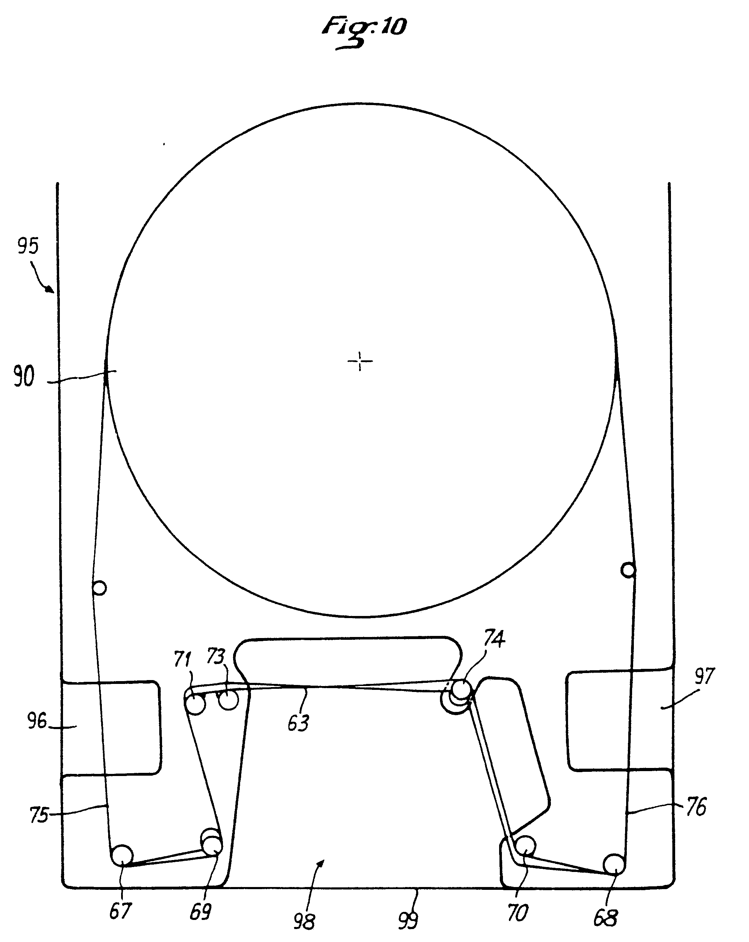

L'invention concerne également un ensemble d'enregistrement et de lecture formé d'une platine et d'une cassette, dont un exemple de réalisation est représenté sur la figure 9 en vue de dessus, tandis que la seule cassette est représentée sur la figure 10.

La cassette 95 comporte un boîtier dans lequel sont montées les deux bobines de stockage de bande coaxiales 89, 90 et les deux ensembles de vrillage aussi bien principal 67, 69 et 68, 70 que secondaire 71, 73 et 74.

Le boîtier de la cassette 95 comporte des trous traversants 96, 97 latéraux, pour le passage des détecteurs de tension de bande 77, 78 et une ouverture frontale 98 destinée au passage du brin de bande 63 libre joignant directement les deux ensembles de vrillage.

L'ouverture frontale 98 (fermée par une paroi frontale 99) permet également, en position de travail sur la platine associée 100, le passage du tambour et le déplacement de l'ensemble des galets mobiles disposés sur cette dernière.

La platine 100 comprend le tambour 38, les galets mobiles 55, 56 et leurs rampes inclinées 91, 92 de chargement, le plateau tournant portant le galet-cabestan 72 et le galet de dérivation 79, les têtes de lecture auxiliaires 81, 82, les deux détecteurs de tension de bande 77, 78, ainsi que les moyens d'entraînement des galets mobiles le long de leurs trajets de chargement inclinés d'une part, et de leurs trajets de débattement horizontaux d'autre part.

Ainsi, on obtient une cassette rigide, donc solide, relativement étanche, et susceptible d'être chargée facilement par le dessus sur la platine, la bande étant déjà vrillée et prête à être chargée sur le tambour 38 par le déplacement des galets mobiles 55, 56 le long de leurs trajets de chargement, sans encombrement supplémentaire.

**Revendications**

1. Appareil d'enregistrement et de lecture d'informations à tête tournante, dans lequel d'une part une bande magnétique (12) est déplacée le long d'un trajet hélicoïdal (11) sur un tambour (38) à la périphérie et selon un plan sécant (Po) duquel se déplace circulairement au moins une tête d'enregistrement et de lecture (42 à 45), et dans lequel d'autre part, la vitesse de rotation de la tête est sensiblement supérieure, en fonctionnement normal, à la vitesse de déplacement de la bande, cet appareil comprenant deux éléments de guidage (55, 56) respectivement disposés en amont et en aval du tambour (38) pour modifier le pas ($\theta$) du trajet hélicoïdal (11) de la bande de fonction de la vitesse de celle-ci, caractérisé en ce que lesdits éléments de guidage sont constitués de deux galets, dont l'un au moins est mobile, et en ce que lesdits galets sont séparés par une différence de hauteur sensiblement constante et non nulle, en ce que chaque galet mobile est susceptible de se déplacer le long d'un trajet de débattement (57, 58) autour d'une position de travail moyenne (Bo, B'o) correspondant à un pas ($\theta_0$) moyen donné, et en ce que le pas ($\theta$) du trajet hélicoïdal (11) est modifié par un déplacement de l'un au moins de ces galets (55, 56) le long de son trajet de débattement (57, 58), opérant une variation de la longueur du brin de bande comprise entre ces galets et passant sur le tambour (38), sans variation sensible de ladite différence de hauteur.

2. Appareil selon la revendication 1, caractérisé en ce que les deux galets sont mobiles (55, 56) et se déplacent de manière que les projections de leurs trajets de débattement (57, 58) dans le plan (Po) de la tête, soient symétriques par rapport au plan bissecteur (Q) de la projection dans le plan de cette tête de l'angle au centre (α) du trajet hélicoïdal (11).

3. Appareil selon l'une des revendications 1 ou 2, caractérisé en ce que les deux galets sont mobiles (55, 56) et se déplacent dans des plans respectifs symétriquement disposés de part et d'autre du plan (Po) de la tête et parallèles à ce dernier, suivant les directions des traces, dans ces plans, des brins de bande (59, 60) tangents à la fois au tambour (38) et à ces galets mobiles respectifs.

4. Appareil selon la revendication 3, du type comprenant au moins deux galets de vrillage (48, 49, 50, 51) disposés respectivement de part et d'autre du tambour (38) au-delà de chaque galet mobile (55, 56) par rapport au tambour, caractérisé en ce que les galets mobiles destinés à faire varier le pas du trajet hélicoïdal (11) jouent également le rôle de moyens de chargement, et sont chacun. à cette fin, monté mobile le long d'un trajet de chargement (61, 62) entre une position de repos (55a, 56a) située par rapport au tambour au-delà du brin de bande libre (63) joignant les galets de vrillage de part et d'autre du tambour, et une position de travail moyenne (Bo, B'o) située dans le plan parallèle au plan (Po) de la tête tournante contenant les trajets de débattement (57, 58) des galets mobiles (55, 56) destinés à la variation du pas (9) du trajet hélicoïdal (11), les trajets de chargement (61, 62) des galets mobiles (55, 56) étant de direction générale inclinée et parcourus, de la position de repos vers la position de travail, suivant un sens respectivement montant (m) pour un galet (55) et descendant (d) pour l'autre (56).

5. Appareil selon la revendication 4 caractérisé en ce que la projection dans le plan de rotation de la tête de chacun des trajets de chargement (57, 58) des deux galets mobiles (55, 56) qui sont destinés à la modification du pas et au chargement est sensiblement transversale au brin de bande libre (63) qui, en position de repos (55a), (56a) des galets mobiles de chargement, joint les galets de vrillage (49 et 50) disposés de part et d'autre du tambour.

6. Appareil selon l'une des revendications 4 à 5, caractérisé en ce qu'il comprend deux ensembles (46, 47) de galets de vrillage disposés de chaque côté du tambour et au-delà du galet mobile (55, 56) correspondant par rapport à ce dernier, chaque ensemble de vrillage comprenant un premier galet (48, 51) relativement éloigné du tambour et d'axe fixe parallèle à celui du tambour et un second galet (49, 50) d'axe incliné oscillant autour de son centre, la direction du brin de bande vrillé (53, 54) reliant deux à deux les deux galets de vrillage de chaque ensemble étant au moins approximativement orthogonale au brin de bande (50, 60) tangent au tambour et au galet mobile correspondant (55, 56) en position chargée de la bande.

7. Appareil selon la revendication 6, caractérisé en ce que chaque ensemble de vrillage comprend deux paires de galets de vrillage, à savoir une première paire composée d'un premier (67, 68) et d'un second (69, 70) galets fixes d'axes respectivement parallèle et incliné par rapport à l'axe (52) du tambour (38), définissant un parcours de vrillage principal (83, 84) et une seconde paire composée d'un troisième galet (71, 72) d'axe incliné fixe et d'un quatrième galet (73, 74) d'axe incliné oscillant définissant un parcours de vrillage secondaire (85, 86) lié aux mouvements de débattement des galets mobiles (55, 56) pour la modification du pas, les galets de vrillage étant disposés de façon que les parcours de vrillage, respectivement principal (83, 84) et secondaire (85, 86) soient parallèles entre eux pour chaque ensemble de vrillage, les fibres neutres des brins de bande (ED1, E'D'1) reliant les deux galets de vrillage (71, 73 et 72, 74) secondaire entre eux deux à deux, étant contenues dans le plan (Po) de rotation de la tête.

8. Appareil selon la revendication 7, caractérisé en ce que pour chaque ensemble de vrillage, les fibres neutres des brins de bande (FG, ED1 et F'G', E'D'1) reliant entre eux, d'une part les galets (67, 69) et (68, 70) de vrillage principal, et d'autre part les galets (71, 73) et (72, 74) de vrillage secondaire, sont orthogonales à la fibre neutre du brin de bande (60, 59) tangent à la fois au tambour (38) et au galet mobile (56, 55).

9. Appareil selon la revendication 7 du type dans lequel la bande magnétique est enroulée sur deux bobines de stockage (89, 90) non coplanaires, caractérisé en ce que les deux galets (67, 69 et 68, 70) de vrillage principal sont disposés de manière que la fibre neutre (83, 84) du brin de bande (FG, F'G') reliant ces deux galets entre eux est disposée dans le plan médian horizontal de la bobine (89, 90) de stockage correspondante, et en ce que les galets de vrillage secondaire (71, 73) et (72, 74) sont disposés de façon que la fibre neutre (85, 86) qui les relie deux à deux soit contenue dans le plan (Po) de rotation de la tête.

10. Appareil selon l'une des revendications 4 à 9, caractérisé en ce qu'il comprend des moyens de déplacement des galets mobiles (55, 56) comportant, pour chaque galet mobile, une rampe inclinée (91, 92) définissant chacune un trajet de chargement respectivement montant (93) et descendant (94), reliant la position de repos (55a, 56a) et la position de travail moyenne du galet mobile correspondant (55, 56) et en ce que chaque rampe inclinée (91, 92) est montée mobile en translation suivant un trajet de débattement (57, 58) parallèle à la projection horizontale du brin de bande (59, 60) tangent au tambour (38) et au galet mobile, pour permettre le déplacement des galets mobiles en vue de la modification du pas du trajet hélicoïdal de la bande sur le tambour.

11. Appareil suivant l'une quelconque des revendications précédentes, pour l'enregistrement et la lecture d'informations sur une bande enroulée sur un jeu de bobines de stockage (89, 90) disposées dans une cassette (95) caractérisé en ce qu'il comprend une platine (100) fixe sur laquelle cette cassette est susceptible d'être mise en place de façon amovible, cette platine (100) comportant ledit tambour (38) cylindrique pourvu d'au moins une tête tournante de lecture et d'enregistrement, deux galets (55, 56) mobiles d'une part entre une position de repos (55a, 56a) et une position de travail moyenne et d'autre part autour de leur position de travail moyenne, un cabestan moteur (72) permettant en position active, une fois la cassette en place, l'entraînement de la bande et en ce que lesdits ensembles de galets de vrillage disposés respectivement en aval et en amont du tambour sont montés sur la cassette dans laquelle des évidements (96, 97, 98) sont prévus, afin de permettre, lors de sa mise en place sur la platine (100), le passage des galets mobiles et du tambour montés sur cette platine et le déplacement des galets mobiles (55, 56, 72, 79, 77, 78) entre leur position de repos et leur position de travail.

12. Appareil suivant la revendication 11, caractérisé en ce que la platine (100) comprend en outre des détecteurs de tension (77, 78) de bande montés sur des plateaux rotatifs entre une position de repos et une position active, et en ce que des évidements sont en outre prévus dans la cassette pour permettre le passage de ces détecteurs dans leur position de repos et leur mouvement vers leur position active.

13. Application d'un appareil d'enregistrement et de lecture d'informations à plusieurs têtes tournantes, conforme à l'une quelconque des revendications précédentes et doté de moyens pour régler la vitesse de bande proportionnellement à un débit d'informations souhaité et de moyens pour mettre en service un nombre de têtes proportionnel à ce débit, en vue de l'enregistrement et de la lecture d'informations selon des débits différents dont le rapport est défini par un nombre rationnel.

**Claims**

1. Apparatus for recording and reading information which has a rotary head and in which, on the one hand, a magnetic tape (12) is moved along a helical path (11) over a drum (38), on the periphery and in a secant plane (Po) of which at least one record and read head (42 to 45) moves circularly, and in which, on the other hand, the speed of rotation of the head is during normal operation substantially higher than the speed of movement of the tape, this apparatus comprising two guiding elements (55, 56) disposed respectively upstream and downstream of the drum (38) in order to modify the pitch ($\theta$) of the helical path (11) of the tape in dependence on the speed of the latter, characterized in that said guiding elements are made up of two rollers, of which at least one is movable, and in that said rollers are separated by a difference in height which is substantially constant and which is not zero, in that each movable roller is adapted to move along a deflection path (57, 58) about a middle working position (Bo, B'o) corresponding to a given middle pitch ($\theta_0$) and in that the pitch ($\theta$) of the helical path (11) is modified by movement of at least one of the rollers (55, 56) along its deflection path (57, 58), which varies the length of the tape portion lying between these rollers and passing over the drum (38), without substantial variation of said difference in height.

2. Apparatus according to Claim 1, characterized in that both the rollers (55, 56) are movable and move in such a manner that the projections of their deflection paths (57, 58) onto the plane (Po) of the head are symmetrical relative to the bisector plane (Q) of the projection onto the plane of this head of the angle at the centre ($\alpha$) of the helical path (11).

3. Apparatus according to one of Claims 1 and 2, characterized in that both the rollers (55, 56) are movable and move in respective planes symmetrically disposed one on each side of the plane (Po) of the head and parallel to said plane, in the directions of the paths, in these planes, of the tape portions (59, 60) tangent both to the drum (38) and to these respective movable rollers.

4. Apparatus according to Claim 3, of the type comprising at least two twist rollers (48, 49, 50, 51) disposed respectively on each side of the drum (38), beyond each movable roller (55, 56) in relation to the drum, characterized in that the movable rollers intended to vary the pitch of the helical path (11) also serve as loading means and each of them is for this purpose mounted for movement along a loading path (61, 62) between a position of rest (55a, 56a) situated, relative to the drum, beyond the free tape portion (63) joining the twist rollers on each side of the drum, and a middle working position (Bo, B'o) situated in the plane parallel to the plane (Po) of the rotary head containing the deflection paths (57, 58) of the movable rollers (55, 56) intended for the variation of the pitch ($\theta$) of the helical path (11), the loading paths (61, 62) of the movable rollers (55, 56) having an inclined general direction and being travelled over, from the position of rest to the working position, respectively in an upward direction (m) in the case of a roller (55) and in a downward direction (d) in the case of the other roller (56).

5. Apparatus according to Claim 4, characterized in that the projection, onto the plane of rotation of the head, of each of the loading paths (57, 58) of the two movable rollers (55, 56) which are intended for modifying the pitch and for loading is substantially transversal to the free tape portion (63) which, in the position of rest (55a, 56a) of the movable loading rollers, joins the twist rollers (49 and 50) disposed one on each side of the drum.

6. Apparatus according to one of Claims 4 to 5, characterized in that it comprises two assemblies (46, 47) of twist rollers disposed one on each side of the drum and beyond the corresponding movable roller (55, 56) in relation to the drum, each twist assembly comprising a first roller (48, 51) relatively distant from the drum and having a fixed axis parallel to that of the drum, and a second roller (49, 50) having an inclined axis oscillating about its centre, the direction of the twisted tape portion (53, 54) connecting pairs of twist rollers in each assembly being at least approximately orthogonal to the tape portion (50, 60) tangent to the drum and to the corresponding movable roller (55, 56) in the loaded position of the tape.

7. Apparatus according to Claim 6, characterized in that each twist assembly comprises two pairs of twist rollers, namely a first pair composed of a first fixed roller (67, 68) and a second fixed roller (69, 70), the axes of these rollers being respectively parallel and inclined in relation to the axis (52) of the drum (38) and these rollers defining a main twist path (83, 84), and a second pair composed of a third roller (71, 72) having a fixed inclined axis and a fourth roller (73, 74) having an inclined oscillating axis, this pair defining a secondary twist path (85, 86) linked to the deflection movements of the movable rollers (55, 56) for the modification of the pitch, the twist rollers being disposed in such a manner that the main twist path (83, 84) and secondary twist path (85, 86) are parallel to one another for each twist assembly, the neutral axes of the tape portions (ED1, E'D'1) connecting the two secondary twist rollers (71, 73 and 72, 74) together in pairs being contained in the plane (Po) of rotation of the head.

8. Apparatus according to Claim 7, characterized in that for each twist assembly the neutral axes of the tape portions (FG, ED1 and F'G', E'D'1) connecting together, on the one hand, the main twist rollers (67, 69) and (68, 70) and, on the other hand, the secondary twist rollers (71, 73) and (72, 74) are orthogonal to the neutral axis of the tape portion (60, 59) tangent both to the drum (38) and to the movable roller (56, 55).

9. Apparatus according to Claim 7, of the type in which the magnetic tape is wound on two storage reels (89, 90) which are not coplanar, characterized in that the two main twist rollers (67, 69 and 68, 70) are disposed in such a manner that the neutral axis (83, 84) of the tape portion (FG, F'6') connecting these two rollers together is disposed in the median horizontal plane of the corresponding storage reel (89, 90), and in that the secondary twist rollers (71, 73) and (72, 74) are disposed in such a manner that the neutral axis (85, 86) connecting them in pairs is contained in the plane (Po) of rotation of the head.

10. Apparatus according to one of Claims 4 to 9, characterized in that it comprises means for the displacement of the movable rollers (55, 56) comprising, for each movable roller, an inclined ramp (91, 92), each ramp defining a respectively rising loading path (93) and descending loading path (94) which connect the position of rest (55a, 56a) and the middle working position of the corresponding movable roller (55, 56), and in that each ramp (91, 92) is mounted for translatory movement over a deflection path (57, 58) parallel to the horizontal projection of the tape portion (59, 60) tangent to the drum (38) and to the movable roller, in order to permit the displacement of the mowable rollers for the purpose of modifying the pitch of the helical tape path on the drum.

11. Apparatus according to any one of the preceding claims, for recording and reading information on a tape wound on a set of storage reels (89, 90) disposed in a cassette (95), characterized in that it comprises a fixed deck (100) on which said cassette is adapted to be removably placed in position, said deck (100) comprising said cylindrical drum (38) provided with at least one rotary read and record head, two rollers (55, 56) movable on the one hand between a position of rest (55a, 56a) and a middle working position, and on the other hand about their middle working position, a drive capstan (72) making it possible in the operative position, once the cassette is in place, to drive the tape, and in that said twist roller assemblies disposed respectively downstream and upstream of the drum are mounted on the cassette, in which cutouts (96, 97, 98) are provided in order to permit, when it is in position on the deck, the passage of the movable rollers and the drum which are mounted on said deck and the displacement of the movable rollers (55, 56, 72, 79, 77, 78) between their position of rest and their working position.

12. Apparatus according to Claim 11, characterized in that the deck (100) is also provided with tape tension detectors (77, 78) mounted on turntables turning between a position of rest and an operative position, and in that cutouts are in addition provided in the cassette to permit the passage of these detectors in their position of rest and their movement to their operative position.

13. Application of an apparatus for recording and reading information which has a plurality of rotary heads, according to any one of the preceding claims and equipped with means for controlling the tape speed in proportion to a desired information rate and with means for bringing into service a number of heads proportional to this rate, for the purpose of recording and reading information in accordance with different rates the ratio of which is defined by a rational number.

**Patentansprüche**

1. Gerät zum Aufnehmen und zum Auslesen von Informationen, mit einem rotierenden Kopf, wobei in diesem Gerät einerseits ein Magnetband (12) entlang einer schraubenförmigen Strecke (11) auf einer Trommel (38) verschoben wird, auf deren Umfang und entlang deren Schnittebene (Po) wenigstens ein Kopf zum Aufnehmen und zum Auslesen (42 bis 45) sich kreisförmig bewegt, und wobei andererseits die Rotationsgeschwindigkeit des Kopfes im normalen Betrieb wesentlich größer als die Verschiebungsgeschwindigkeit des Bandes ist, wobei dieses Gerät zwei Führungselemente (55, 56) umfaßt, die vor bzw. hinter der Trommel (38) angeordnet sind, um die Steigung ($\theta$) der schraubenformigen Strecke (11) des Bandes in Abhängigkeit von seiner Geschwindigkeit zu verändern, dadurch gekennzeichnet, daß die genannten Führungselemente aus zwei Rollen bestehen, wovon wenigstens die eine beweglich ist, und daß diese Rollen durch einen im wesentlichen konstanten und nicht verschwindenden Höhenunterschied getrennt sind, daß jede bewegliche Rolle dazu in der Lage ist, sich entlang einer Auslenkstrecke (57, 58) um eine mittlere Arbeitsposition (Bo, B'o) zu bewegen, welche einer bestimmten mittleren Steigung ($\theta_o$) entspricht, und daß die Steigung ($\theta$) der schraubenförmigen Strecke (11) durch eine Verschiebung wenigstens einer dieser Rollen (55, 56) entlang ihrer Bewegungsstrecke (57, 58) verändert wird, was eine Veränderung der Lange des Bandabschnittes bewirkt, die zwischen diesen Rollen enthalten ist und an der Trommel (38) vorbeiläuft, ohne eine wesentliche Veränderung des genannten Höhenunterschieds.

2. Gerät nach Anspruch 1 dadurch gekennzeichnet, daß die beiden Rollen (55, 56) beweglich sind und sich so verschieben, daß die Projektionen ihrer Auslenkstrecken (57, 58) auf die Ebene (Po) des Kopfes in Bezug auf die halbierende Ebene (Q) der Projektion auf die Ebene dieses Kopfes des Winkels ($\alpha$) im Mittelpunkt der schraubenförmigen Strecke (11) symmetrisch sind.

3. Gerät nach Anspruch 1 oder 2, dadurch gekennzeichnet, daß die beiden Rollen (55, 56) beweglich sind und sich in den jeweiligen Ebenen, die beiderseits der Ebene (Po) des Kopfes symmetrisch angeordnet sind und zu dieser parallel sind, entlang der Spurrichtungen in diesen Ebenen der Bandabschnitte (59, 60) verschieben, welche sowohl die Trommel (38) als auch diese jeweiligen beweglichen Rollen berühren.

4. Gerät nach Anspruch 3, vom Typ mit wenigstens zwei Torsionsrollen (48, 49, 50, 51), welche jeweils beiderseits der Trommel (38) über jeder beweglichen Rolle (55, 56) in Bezug auf die Trommel angeordnet sind, dadurch gekennzeichnet, daß die beweglichen Rollen, die dazu bestimmt sind, die Steigung der schraubenförmigen Strecke (11) zu verändern, auch die Funktion von Lademitteln übernehmen und daß jede Rolle zu diesem Zweck entlang einer Ladestrecke (61, 62) zwischen einer Ruhestellung (55a, 56a), die in Bezug auf die Trommel über dem Abschnitt des freien Bandes (63) liegt, welcher die Torsionsrollen beiderseits der Trommel miteinander verbindet, und einer mittleren Arbeitsstellung (Bo, B'o) beweglich gelagert ist, die in der Ebene liegt, welche zu der Ebene (Po) des rotierenden Kopfes parallel ist, die die Auslenkstrecken (57, 58) der beweglichen Rollen (55, 56) enthält, die für die Veränderung der Steigung ($\theta$) der schraubenförmigen Strecke (11) vorgesehen sind, wobei die Ladestrecken (61, 62) der beweglichen Rollen (55, 56) eine allgemein geneigte Richtung aufweisen und von der Ruhestellung aus zur Arbeitsstellung gemäß einer Richtung durchlaufen werden, die ansteigend (m) für eine Rolle (55) und absteigend (d) für die andere Rolle ist.

5. Gerät nach Anspruch 4, dadurch gekennzeichnet, daß die auf die Rotationsebene des Kopfes bezogene Projektion jeder der Ladestrecken (57, 58) der beiden beweglichen Rollen (55, 56), die für die Veränderung des Schrittes sowie für das Laden vorgesehen sind, zu dem Abschnitt des freien Bandes (63) im wesentlichen quer liegt, der in Ruhestellung (55a, 56a) der beweglichen Laderollen die beiderseits der Trommel angeordneten Torsionsrollen (49 und 50) miteinander verbindet.

6. Gerät nach Anspruch 4 oder 5, dadurch gekennzeichnet, daß es zwei Gruppen (46, 47) von Torsionsrollen umfaßt, die beiderseits der Trommel und über der beweglichen Rolle (55, 56), die dieser entspricht, angeordnet sind, wobei jede Torsionsgruppe eine erste Rolle (48, 51), die von der Trommel relativ entfernt ist und eine feste Achse aufweist, die zu der Achse der Trommel parallel ist, sowie eine zweite Rolle (49, 50) einer geneigten Achse umfaßt, welche um ihren Mittelpunkt schwingt, wobei die Richtung des spiralig eingerollten Bandabschnittes (53, 54), der die beiden Torsionsrollen jeder Gruppe paarweise miteinander verbindet, zu dem Bandabschnitt (50, 60) wenigstens annähernd orthogonal ist, welcher in geladener Stellung des Bandes die Trommel und die entsprechende bewegliche Rolle (55, 56) berührt.

7. Gerät nach Anspruch 6, dadurch gekennzeichnet, daß jede Torsionsgruppe zwei Torsionsrollenpaare umfaßt, ein erstes Paar, das aus einer ersten festen Rolle (67, 68) sowie aus einer zweiten festen Rolle (69, 70) besteht, wovon die Achse in Bezug auf die Achse der Trommel (38) parallel bzw. geneigt ist, welche eine Haupttorsionsstrecke (83, 84) definiert, sowie ein zweites Paar umfaßt, das aus einer dritten Rolle (71, 72) einer feststehenden geneigten Achse sowie aus einer vierten Rolle (73, 74) einer pendelnden geneigten Achse besteht, die eine sekundäre Torsionsstrecke (85, 86) definiert, welche an die Auslenkbewegungen der beweglichen Rollen (55, 56) für die Veränderung der Steigung gebunden ist, wobei die Torsionsrollen so angeordnet sind, daß die Haupttorsionsstrecke (83, 84) bzw. die sekundäre Torsionsstrecke (85, 86) für jede Torsionsgruppe zueinander parallel sind, wobei die neutralen Fasern der Bandabschnitte (ED1, E'D'1), welche die beiden Rollen (71, 73 und 72, 74) der sekundären Torsion miteinander paarweise verbinden, in der Ebene (Po) der Rotation des Kopfes enthalten sind.

8. Gerät nach Anspruch 7, dadurch gekennzeichnet, daß für jede Torsionsgruppe die neutralen Fasern der Bandabschnitte (FG, ED1 und F'G', E'D'1), die einerseits die Rollen (67, 69) und (68, 70) der Haupttorsion und andererseits die Rollen (71, 73) und (72, 74) der sekundären Torsion miteinander verbinden, zu der neutralen Faser des Bandabschnittes (60, 59), der sowohl die Trommel (38) als auch die bewegliche Rolle (56, 55) berührt, orthogonal sind.

9. Gerät nach Anspruch 7, vom Typ, in welchem das Magnetband auf zwei nicht koplanaren Speicherspulen gewickelt ist, dadurch gekennzeichnet, daß die beiden Rollen (67, 69 und 68, 70) für die Haupttorsion so angeordnet sind, daß die neutrale Faser (83, 84) des Bandabschnittes (FG, F'G'), welcher diese beiden Rollen miteinander verbindet, in der waagerechten Mittelebene der entsprechenden Speicherspule (89, 90) angeordnet ist, und daß die Rollen (71, 73) und (72, 74) für die sekundäre Torsion so angeordnet sind, daß die sie paarweise verbindende neutrale Faser (85, 86) in der Rotationsebene (Po) des Kopfes enthalten ist.

10. Gerät nach einem der Ansprüche 4 bis 9, dadurch gekennzeichnet, daß es Mittel zur Verschiebung der beweglichen Rollen (55, 56) umfaßt, die für jede bewegliche Rolle eine geneigte Rampe (91, 92) aufweisen, wobei jede Rampe eine ansteigende Ladestrecke (93) bzw. eine absteigende Ladestrecke (94) definiert, die die Ruhestellung (55a, 56a) mit der mittleren Arbeitsposition der entsprechenden beweglichen Rolle (55, 56) verbindet, und daß jede geneigte Rampe (91, 92) entlang einer Auslenkstrecke (57, 58) in Translation beweglich gelagert ist, die zu der waagerechten Projektion des Bandabschnittes (59, 60), der die Trommel (38) sowie die bewegliche Rolle berührt, parallel ist, um die Verschiebung der beweglichen Rollen im Hinblick auf die Veränderung der Steigung der schraubenförmigen Strecke des Bandes auf der Trommel zu ermöglichen.

11. Gerät nach einem der vorstehenden Ansprüche für die Aufnahme und das Auslesen von Informationen auf einem Band, das auf einem Satz von Speicherspulen (89, 90) aufgewickelt ist, die in einer Kassette (95) angeordnet sind, dadurch gekennzeichnet, daß es umfaßt: eine feststehende Platte (100) auf welcher diese Kassette abnehmbar angeordnet werden kann, wobei diese Plate (100) die mit wenigstens einem rotierenden Kopf zum Auslesen und zum Aufnehmen versehene Zylindrische Trommel (38) umfaßt; zwei Rollen (55, 56), die einerseits zwischen einer Ruhestellung (55a, 56a) und einer mittleren Arbeitsstellung und andererseits um ihre mittlere Arbeitsstellung beweglich sind; eine Treibrolle (72), die in ihrer aktiven Stellung, wenn die Kassette an ihrer Stelle ist, den Antrieb des Bandes ermöglicht; und daß die genannten Gruppen der Torsionsrollen, welche vor bzw. hinter der Trommel angeordnet sind, auf der Kassette angebracht sind, in welcher Aussparungen (96, 97, 98) vorgesehen sind, um bei ihrer Anordnung auf der Platte (100) das Durchlaufen der beweglichen Rollen sowie der Trommel, welche auf dieser Platte angebracht sind, sowie die Verschiebung der beweglichen Rollen (55, 56, 72, 79, 77, 78) zwischen ihrer Ruhestellung und ihrer Arbeitsstellung zu ermöglichen.

12. Gerät nach Anspruch 11, dadurch gekennzeichnet, daß die Platte (100) ferner Detektoren (77, 78) für die Bandspannung umfaßt, die auf Drehscheiben zwischen einer Ruhestellung und einer Arbeitsstellung angebracht sind, und daß ferner Aussparungen in der Kassette vorgesehen sind, um den Übergang dieser Detektoren in ihre Ruhestellung sowie ihre Bewegung zu ihrer aktiven Position hin zu ermöglichen.

13. Anwendung eines Gerätes zum Aufnehmen und zum Auslesen von Informationen mit mehreren rotierenden Köpfen nach einem der vorstehenden Ansprüche und mit Mitteln zum Regeln der Geschwindigkeit des Bandes im Verhältnis zu einem erwünschten Informationsdurchsatz sowie mit Mitteln für die Inbetriebnahme einer Anzahl von Köpfen, welche zu diesem Durchsatz proportional ist, im Hinblick auf die Aufnahme sowie auf das Auslesen von Informationen gemäß verschiedenen Durchsätzen, deren Verhältnis durch eine rationale Zahl definiert ist.

*Fig.1A*

*Fig.2*

*Fig.3A*

*Fig.4*

## Fig. 1B

*Fig. 3C*

*Fig. 3B*

Fig. 5

Fig. 8

EP 0 180 489 B1

*Fig. 6*

*Fig. 7*

EP 0 180 489 B1

# Fig. 9

Fig:10